**Europäisches Patentamt**

(19) **European Patent Office**

**Office européen des brevets**

(11) Numéro de publication: **0 151 542**
**B1**

(12) **FASCICULE DE BREVET EUROPÉEN**

(45) Date de publication du fascicule du brevet:
22.07.87

(51) Int. Cl.⁴: **B 64 C 1/22**

(21) Numéro de dépôt: **85400043.7**

(22) Date de dépôt: **10.01.85**

(54) Procédé et dispositif pour augmenter provisoirement l'ouverture des cadres structuraux d'un aéronef.

(30) Priorité: **24.01.84 FR 8401054**

(43) Date de publication de la demande:
**14.08.85 Bulletin 85/33**

(45) Mention de la délivrance du brevet:
**22.07.87 Bulletin 87/30**

(84) Etats contractants désignés:
**DE GB IT**

(56) Documents cité:
**DE-B-1 217 213**
**GB-A-613 739**
**GB-A-1 206 848**

(73) Titulaire: **AEROSPATIALE Société Nationale Industrielle, 37 boulevard de Montmorency, F-75781 Paris Cédex 16 (FR)**

(72) Inventeur: **Doyhamboure, François, 7, rue du Moulin, F-33700 Merignac (FR)**
Inventeur: **Morand, Jean, 18, rue Victoire Américaine, F-33000 Bordeaux (FR)**

(74) Mandataire: **Bonnetat, Christian, Cabinet PROPI Conseils 23 rue de Léningrad, F-75008 Paris (FR)**

LIBER, STOCKHOLM 1987

EP 0 151 542 B1

## Description

La présente invention concerne un procédé et un dispositif permettant d'augmenter provisoirement l'ouverture des cadres structuraux d'un aéronef.

On sait que la structure d'un avion comporte une pluralité de cadres transversaux espacés et des longerons solidarisant lesdits cadres entre eux, une telle structure étant recouverte de la peau de l'avion. On sait de plus que, dans certains cas, notamment en ce qui concerne les avions cargos, au moins certains de ces cadres structuraux, qui doivent présenter une grande résistance mécanique, sont constitués d'un chassis annulaire généralement formé par un profilé curviligne et renforcé à certains endroits par des poutres sous-tendant des parties dudit châssis. Il va de soi que, si de telles poutres confèrent aux cadres correspondants des propriétés de résistance mécanique désirées, pour permettre à l'avion de supporter les conditions d'utilisation les plus sévéres, en revanche, elles restreignent l'ouverture desdits cadres et, par voie de conséquence, le gabarit des charqges qui peuvent être introduites dans ledit avion.

Il arrive fréquemment qu'une charge ne puisse être introduite dans un avion cargo parce que son gabarit dépasse de quelques centimétres la dimension correspondante de l'ouverture. Il arrivé même, dans le cas d'avion cargo ayant une porte arrière susceptible de servir de rampe inclinée d'introduction de la charge, que celle-ci ne puisse passer à travers l'ouverture du cadre structuré se trouvant au droit de la partie supérieure de la rampe, uniquement à cause de l'inclinaison de celle-ci, alors que les dimensions de la charge lui permettraient d'être introduite à travers ledit cadre si la direction d'introduction était horizontale au lieu d'être inclinée vers le haut. Dans ce cas, il serait indispensable de lever le nez de l'avion cargo de façon à amener la rampe et le plancher de l'avion en alignement. Une telle mesure, outre le fait qu'elle est compliquée et délicate, peut de plus se révéler insuffisante.

Pour tenter de résoudre ce problème, on pourrait penser à modifier de façon définitive la ou les poutres empêchant l'introduction de la charge; cependant, une telle solution ne peut être mise en oeuvre qu'en accord avec le constructeur de l'avion et nécessite une révision du certificat de navigabilité de celui-ci. On pourrait également penser à éliminer provisoirement la ou les poutres de cadre gênantes aux moments du chargement et du déchargement de la charge; mais alors la structure de l'avion subissant au sol des efforts importants, il risquerait d'en résulter des déformations et des diminutions de resistance mécaniques inadmissibles.

La présente invention a pour objet de remédier à ces inconvénients.

A cette fin, selon l'invention, le procédé pour augmenter provisoirement l'ouverture d'un cadre structural d'un aéronef, notamment aux moments du chargement et du déchargement d'une charge, ledit cadre structural étant constitué d'un châssis annulaire renforcé par au moins une poutre structurale sous-tendant une partie dudit châssis, est remarquable en ce que:
- dans le cas où ladite poutre structurale serait fixée au châssis, en totalité ou en partie, par des moyens de fixation non démontables, on commence par effectuer une modification durable consistant à remplacer lesdits moyens de fixation non démontables par des moyens de fixation amovibles;
- on prévoit un outillage susceptible, d'une part, de remplacer mécaniquement la poutre structurale ou la partie de poutre structurale fixée au châssis par des moyens de fixation amovibles et, d'autre part, d'assurer l'augmentation d'ouverture désirée pour ledit cadre;
- pendant les périodes auxquelles on désire une augmentation de l'ouverture du cadre, on remplace ladite poutre structurale ou partie de poutre structurale par ledit outillage; et
- à la fin de ces périodes, on remplace ledit outillage par ladite poutre structurale ou partie de poutre structurale.

Ainsi, selon l'invention, on substitue à la poutre structurale ou à la partie de poutre structurale, éventuellement rendue démontable si elle ne l'était pas d'origine, un outillage permettant d'assurer à la fois la résistance mécanique et le gabarit désiré pendant, par exemple, les périodes de chargement et de déchargement d'une charge. En dehors de ces périodes exceptionnelles, la poutre ou partie de poutre d'origine est en place et à même d'exercer sa fonction.

Dans le cas où, de façon usuelle, il exite des éléments de liaison mécaniques entre ladite poutre ou partie de poutre structurale amovible ou rendue amovible et un cadre voisin dudit cadre, on rend ces éléments de liaison amovibles, s'ils ne l'étaient pas d'origine, pour pouvoir les monter et les démonter à volonté et on prévoit dans l'outillage des moyens pour la substitution provisoire de ces éléments de liaison.

Ainsi, le dispositif selon l'invention permettant d'augmenter provisoirement l'ouverture d'un cadre structural d'aéronef, notamment aux moments du chargement et du déchargement d'une charge, ledit cadre structural étant constitué d'un châssis annulaire renforcé par au moins une poutre structurale sous-tendant une partie dudit châssis, est remarquable en ce qu'il comporte un outillage pouvant être fixé provisoirement audit châssis pour, d'une part, remplacer mécaniquement ladite poutre structurale ou une partie de celle-ci et, d'autre part, assurer l'augmentation d'ouverture désirée pour ledit cadre, lorsque ledit outillage est rendu solidaire dudit châssis à la place de ladite poutre structurale ou partie de poutre.

Avantageusement, un tel outillage comporte une poutre en forme d'arc ou analogue et au moins un tirant, ledit tirant étant destiné à relier la partie médiane de la poutre d'outillage au châssis du cadre, tandis que des moyens sont prévus pour solidariser audit châssis les extrémités de ladite poutre d'outillage en des points proches de ceux de la membrure de la poutre structurale provisoirement remplacée.

Afin de faciliter sa mise en place, ladite poutre d'outillage peut être constituée de deux parties assemblables.

Lorsque des bielles structurales existent entre le cadre dont on veut agrandir provisoirement l'ouverture et un cadre voisin, l'outillage comporte également des bielles d'outillage de substitution, reliées de façon amovible auxdits tirants et/ou à la partie médiane de ladite poutre d'outillage.

Dans la mesure du possible, on utilise les ferrures et ancrages prévus d'origine sur les châssis et cadres structuraux pour fixer provisoirement de façon amovible l'outillage selon l'invention. Pour les points de fixation ne pouvant pas utiliser de tels ferrures ou ancrages préexistants, on met de préférence en oeuvre des moyens de fixation par serrage ou bien on prévoit des ferrures de fixation faisant partie dudit outillage et fixées soit à demeure sur des éléments structuraux de l'aéronef, soit de façon amovible.

De préférence, afin de faciliter la pose et la dépose de la poutre structurale et de la poutre d'outillage, ledit outillage comporte de plus un tendeur susceptible d'être monté en parallèle sur ladite poutre structurale.

Les figures du dessin annexé feront bien comprendre comment l'invention peut être réalisée. Sur ces figures, des références identiques désignent des éléments semblables.

La figure 1 est une vue latérale schématique d'un avion cargo pourvu d'une rampe de queue, auquel s'applique la présente invention.

La figure 2 est une coupe transversale dudit avion cargo, selon la ligne de coupe II-II de la figure 1.

La figure 3 est une vue en élévation de la partie supérieure du cadre de la structure de l'avion cargo des figures 1 et 2, au niveau de l'articulation de la rampe de queue.

La figure 4 est une vue de dessus de la partie supérieure de la structure de l'avion des figures 1 et 2, entre le cadre se trouvant au niveau de l'articulation de la rampe de queue et le cadre suivant immédiatement celui-ci en direction de la queue de l'avion.

Les figures 5 et 6 illustrent, en élévation et en plan suivant des vues correspondant respectivement aux figures 3 et 4, la mise en oeuvre de la présente invention.

La figure 7 est une vue latérale schématique montrant l'outillage selon l'invention mis en place entre deux cadres consécutifs.

La figure 8 est une vue de l'arrière partielle, plus détaillée, de la poutre d'outillage selon l'invention.

Les figures 9 et 10 sont respectivement des coupes suivant les lignes IX-IX et X-X de la figure 8.

La figure 11 est une vue de côté montrant en détail la mise en place d'un tirant sur un cadre et la solidarisation entre la poutre d'outillage et ledit tirant.

La figure 12 est une vue de l'avant d'un tirant selon la flèche XII de la figure 11, sans cadre ni moyens de fixation à celui-ci.

La figure 13 est une vue latérale montrant l'ancrage des bielles de l'outillage sur le cadre consécutif à celui sur lequel sont montés lesdits tirants.

La figure 14 est une vue en plan de l'ancrage montré par la figure 13.

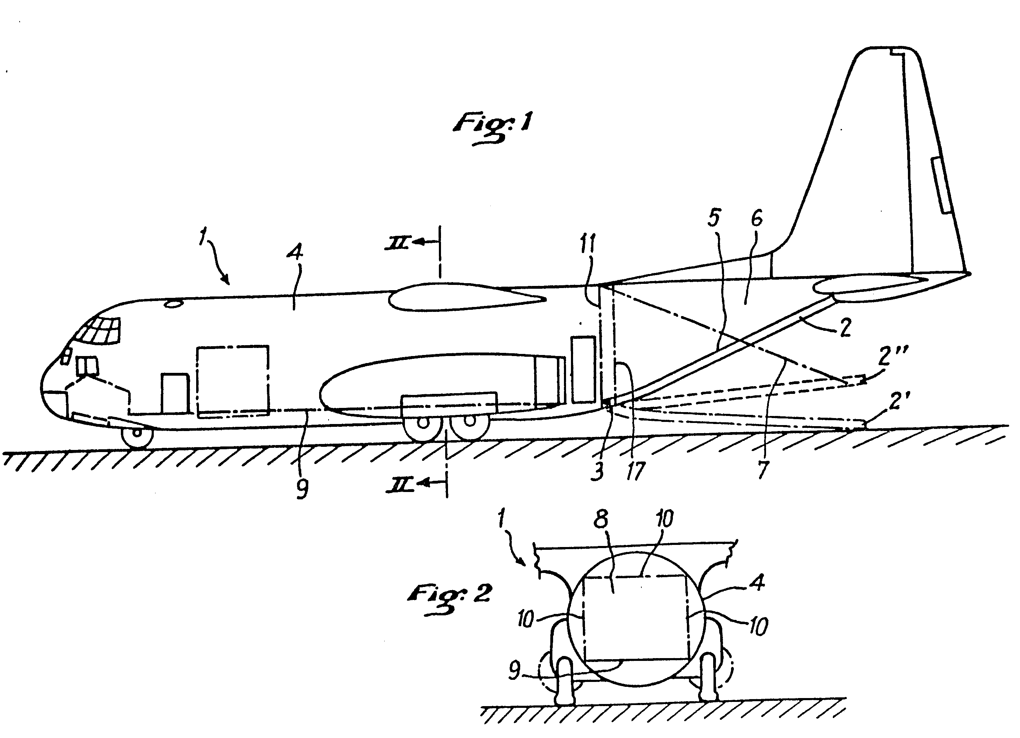

L'avion cargo 1 de type connu, auquel s'applique la présente invention, comporte une porte de queue 2 articulée autour d'un axe intermédiaire transversal 3 de son fuselage 4, afin de pouvoir s'ouvrir de haut en bas vers l'arrière dudit avion. Cette porte de queue 2 peut prendre une position fermée (représentée en trait plein sur la figure 1) pour laquelle elle obture une large ouverture de chargement 5 et forme la partie inférieure de la queue 6, ou une position ouverte 2' (représentée en traits mixtes sur la figure 1) pour laquelle elle dégage largement ladite ouverture 5 et peut servir de rampe pour le chargement dudit avion, lorsque celui-ci est au sol. Eventuellement, lorsque l'avion 1 est en vol, la porte 2 peut être ouverte, par exemple pour permettre une opération de parachutage par l'arrière. Dans ce cas, elle prend une position 2'' (en pointillés) et est maintenue ouverte par des bielles latérales 7.

De façon connue, la structure de l'avion 1 est formée de cadres transversaux espacés, reliés longitudinalement entre eux et revêtus de la peau formant le fuselage 4. Ces cadres, qui assurent la résistance mécanique dudit fuselage, sont chacun constitués d'un profilé périphérique renforcé par des poutres sous-tendant des portions dudit profilé.

De telles poutres structurales, quoique indispensables mécaniquement, ont donc pour effet défavorable de restreindre l'espace intérieur disponible du fuselage 4 de l'avion 1.

Comme on l'a représenté schématiquement sur la figure 2, l'espace disponible en section à l'intérieur du fuselage 4 est limité, au moins en certains endroits, au rectangle 8, délimité par le plancher 9 et les membrures internes 10 desdites poutres.

Le cadre 11 du fuselage 4, qui se trouve au droit de l'articulation 3 de la porte 2 et qui délimite donc la section maximale de chargement de l'avion cargo 1, présente une structure identique à celle décrite cidessus.

Sur la figure 3, on a représenté la partie supérieure dudit cadre 11 et on peut y voir la partie correspondante du profilé périphérique 12, sous-tendu par une poutre de renfort supérieure 13. Cette poutre 13 comporte la membrure interne 10 et un treillis 14, reliant ladite membrure 10 au profilé périphérique 12. On voit donc que la hauteur de chargement à l'intérieur de l'avion cargo 1 est limitée par la poutre 13.

Le cadre 11 comporte de plus des ferrures 15 solidaires du profilé 12, au voisinage des extrémités de la membrure interne 10, et des ferrures 16 solidaires de ladite membrure interne 10, au voisinage des extrémités de cette dernière. De telles ferrures sont prévues d'origine pour l'ancrage des bielles latérales 7, maintenant la porte 2 en position d'ouverture 2''.

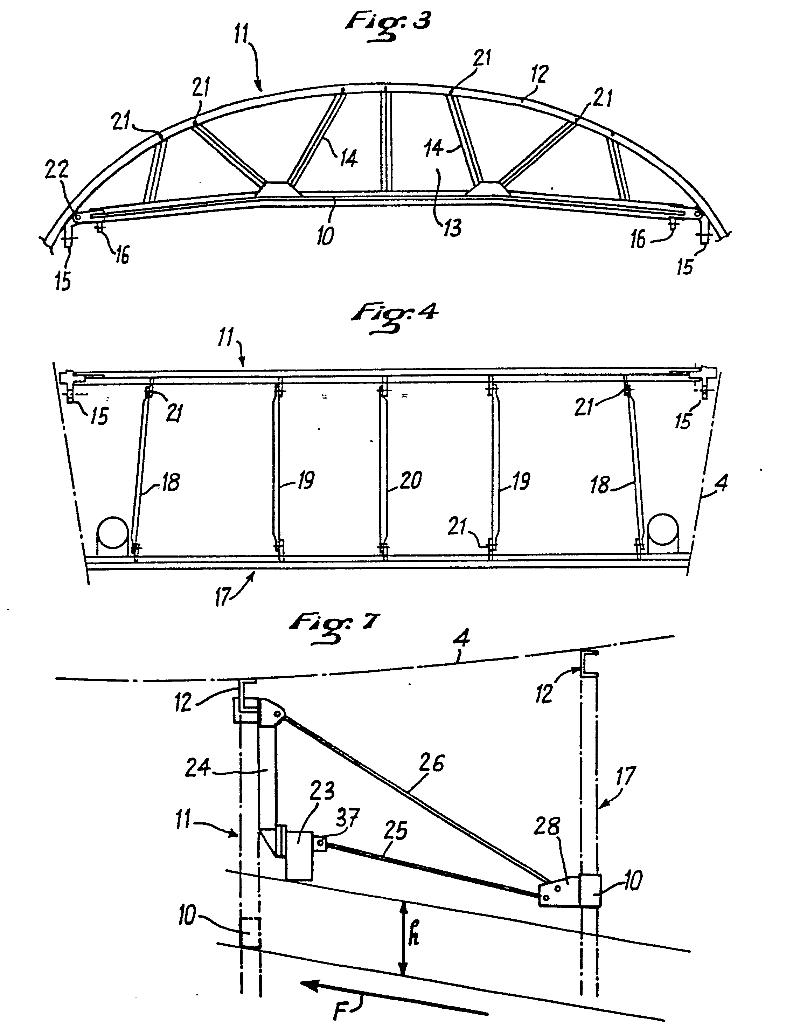

En outre, la partie supérieure du cadre 11 est reliée à la partie supérieure du cadre 17 suivant immédiatement ledit cadre 11 en direction de la queue de l'avion cargo 1 par des bielles structurales 18 à 20, de direction générale au moins approximativementt longitudinale par rapport à l'avion 1. Le cadre 17 présente une structure identique à celle du cadre 11 et sur la figure 7, on peut voir la disposition relative des profilés 12 et des membrures 10 desdits cadres consécutifs 11 et 17; cette figure montre notamment qu'à partir du cadre 11, en direction de l'arrière, la ligne supérieure du fuselage 4 de l'avion cargo 1 pris comme exemple s'éléve, comme cela est représenté sur la figure 1.

L'exemple de mise en oeuvre de l'invention, décrit ci-après, a pour objet d'augmenter, au niveau du cadre 11, la hauteur de la section libre à l'intérieur de celui-ci et limitée, jusqu'ici, par la poutre interne 10 dudit cadre 11.

A cet effet, selon l'invention, on commence par éventuellement modifier de façon durable les moyens de fixation 21, d'une part, du treillis 14 sur le profilé 12 du cadre 11 et, d'autre part, des bielles 18,19 et 20 sur les cadres 11 et 17. Si ces moyens de fixation 21 ne sont pas prévus démontables d'origine par le constructeur, on les remplace par des moyens de fixation démontables : par exemple, on remplace des rivets par des vis à écrou. De même, si les moyens de fixation 22 reliant la membrure 10 au profilé 12 n'étaient pas amovibles, on les remplacerait par des moyens de fixation qui le seraient.

De plus, on prévoit un outillage comportant une poutre 23, deux tirants 24, deux bielles 25, deux bielles 26 et un tendeur 27.

Comme illustré schématiquement sur les figures 5 et 6 (qui correspondent respectivement aux figures 3 et 4), et sur la figure 7, on commence par fixer, sur le profilé 12 du cadre 11, les deux tirants 24 par une de leurs extrémités, leurs autres extrémités (alors libres) étant dirigées vers l'intérieur du cadre 11, mais au-dessus de la membrure 10 de celui-ci. Les tirants 24 sont disposés symétriquement par rapport au plan vertical médian du fuselage 4 et leur mise en place peut être facilitée par des repères tracés, par exemple à la peinture, sur le profilé périphérique 12 du cadre 11. Ensuite, on dépose les bielles latéralement extérieures 18, reliant les cadres 11 et 17.

A travers le passage laissé libre par la dépose des bielles 18, on met en place la poutre 23, avantageusement réalisée en deux éléments assemblables. Cette poutre 23 est disposée tranversalement et prend appui sur les ferrures 15 solidaires du profil 12 du cadre 11.

On dépose alors les bielles 19 et l'on met en place les bielles 25 et 26 de l'outillage. Les bielles 25 relient la poutre 23 à la membrure 10 du cadre 17, alors que les bielles 26 relient cette dernière membrure 10 à l'extrémité supérieure des tirants 24. Des goussets 28 peuvent être prévus sur la membrure 10 du cadre 17 pour la fixation des bielles 25 et 26. Les bielles 25 et 26 n'ont pas été représentées sur la figure 5, à des fins de clarté du dessin. Après mise en place desdites bielles 25 et 26, on dépose la ou les bielles 20.

On met en place le tendeur 27 entre les deux ferrures 16 de la membrure 10 du cadre 11; on met en tension ledit tendeur 27 et on élimine les moyens de fixation 22 des extrémités de la membrure 10 sur les ferrures 15. On élimine ensuite les moyens de fixation 21 des différents éléments du treillis 14 sur le profilé périphérique 12 du cadre 11. Il est alors possible d'éliminer la poutre 13.

Du fait que la poutre 23 présente une forme plus concave que la membrure 10 du cadre 11, l'outillage selon l'invention permet d'augmenter la hauteur libre au niveau du cadre 11. Compte tenu de la direction inclinée de chargement F donnée par la rampe 2', le gain de hauteur libre est indiqué sur la figure 7 par la référence h.

Lorsque le chargement de l'avion cargo 1 est terminé, on élimine l'outillage 23 à 28 par un processus inverse et l'on remet en place la poutre structurale 13 et les bielles structurales 18, 19 et 20.

Comme le montrent les figures 5, 8, 9 et 10, la poutre d'outillage 23 présente une structure en caisson et une forme arquée. Elle est composée de deux éléments 23a et 23b, symétriques, assemblés par un manchon central 29 constitué de deux parties 29a et 29b, respectivement solidaires de l'élément 23a ou 23b correspondant. Chaque élément 23a ou 23b comporte un tronçon d'extrémité incliné 30a ou 30b et une portion médiane horizontale 31a et 31b. Ce sont les portions médianes horizontales 31a et 31b qui peuvent être solidarisées par le manchon central 29 et des vis 32. Une broche 33 permet, au montage et avant mise en place des vis 32, de fixer la position relative correcte entre les deux éléments 23a et 23b de la poutre 23.

Aux extrémités libres de leur tronçon 30a et 30b, les éléments 23a et 23b comportent des vis 34 susceptibles d'une part, de pénétrer dans des trous correspondant des ferrures 15 et, d'autre part, de coopérer avec des écrous 35, pour fixer la poutre 23 sur le cadre 11. Dans cette position de fixation, l'élément médian horizontal 31a, 31b de la poutre 23 se trouve à un niveau supérieur à celui de la membrure 10 de la poutre structurale 13.

Sur la face avant des portions médianes horizontales 31a et 31b, la poutre 23 comporté des trous filetés 36 pour la solidarisation de la base des tirants 24 (voir la figure 11). Sur la face arrière desdites portions médianes 31a et 31b sont prévues des pattes ou chapes 37 pour la fixation des bielles 25.

Chaque tirant 24 comporte, à sa partie supérieure, des mâchoires 38, 39 capables d'enserrer une partie du profilé 12 du cadre 11 pour fixer ledit tirant audit profilé. Les mâchoires 38 et 39 peuvent être serrées l'une contre l'autre par des vis 40, traversant des trous 41 prévus dans la tête 42 dudit tirant 24. Cette tête 42 comporte de plus un gousset 43 pour la fixation d'une bielle 26.

La base 44 de chaque tirant 24 est percée de trous 45 pour le passage de vis (non représentées) susceptibles de se visser dans les trous filetés 36 de la poutre 23.

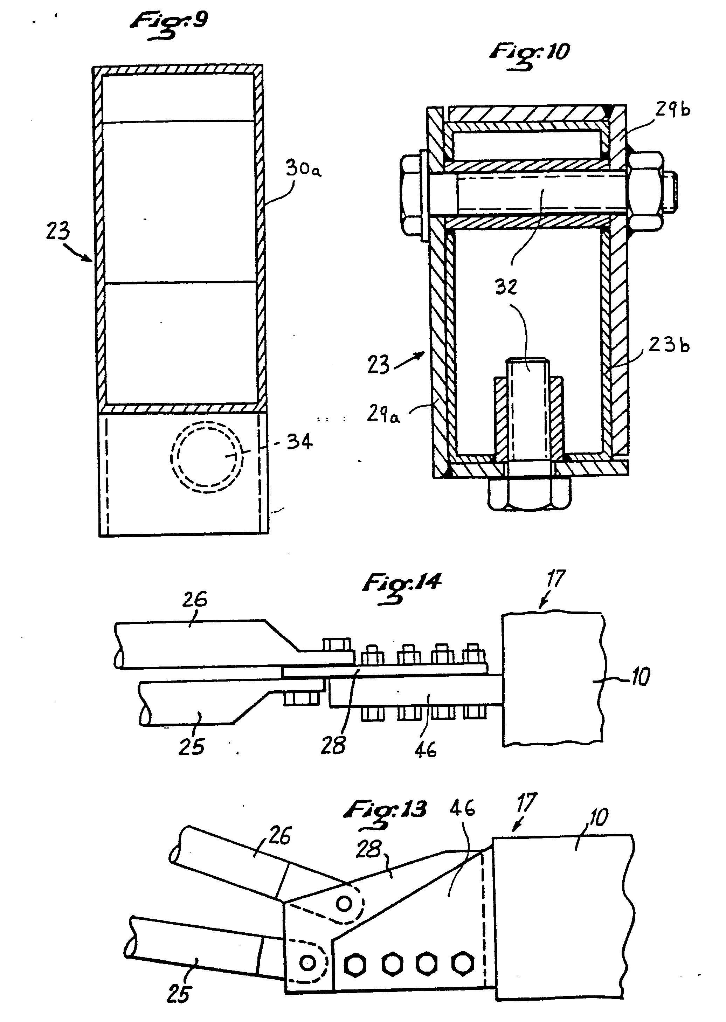

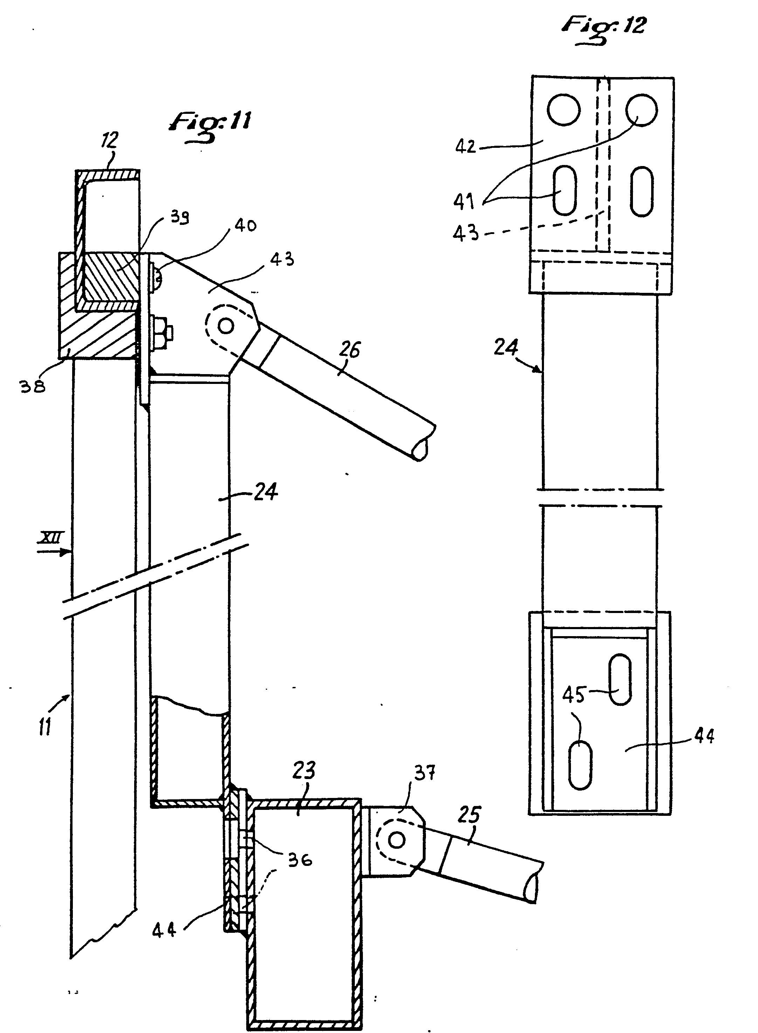

Les goussets 28 de fixation des bielles 25 et 26 sur le cadre structural 17 peuvent eux-mêmes être fixés sur des ferrures 46 prévues d'origine pour la fixation des bielles structurales 18, 19 et 20 (voir les figures 13 et 14).

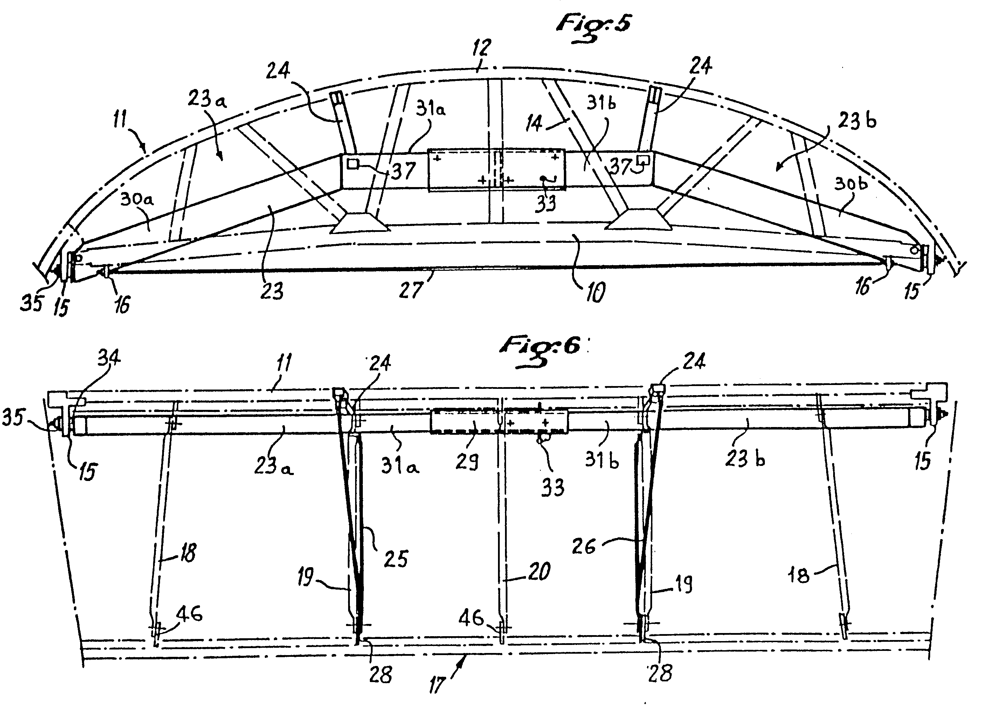

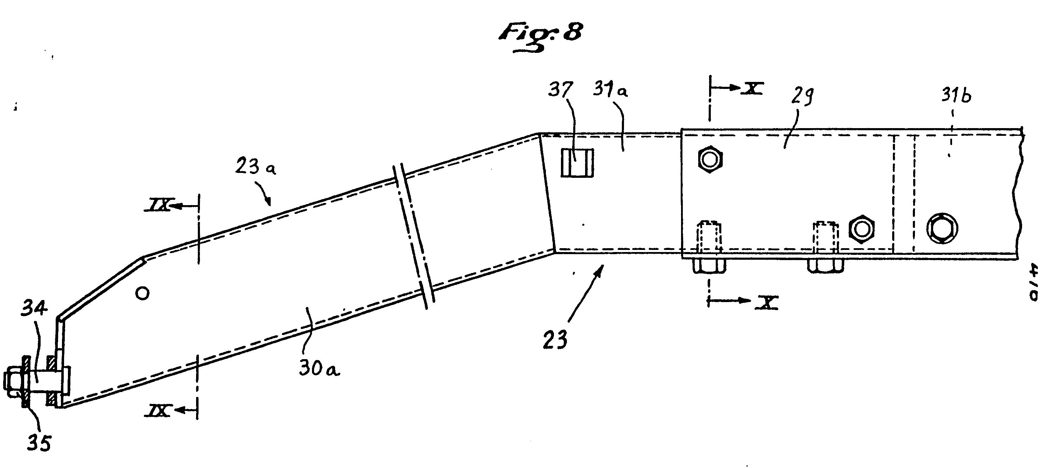

Avec l'outillage représenté sur les figures 8 à 14, la substitution de la poutre structurale 13 et des bielles structurales 18, 19 et 20 par ledit outillage peut s'effectuer de la façon suivante:
- on met d'abord en place les tirants 24 sur le profilé 12 du cadre 11 et on solidarise lesdits tirants de ce profilé par action des mâchoires 38, 39 et des vis 40;
- on élimine les bielles structurales latérales 18, après avoir éliminé leurs moyens de fixation amovibles 21, les reliant aux cadres 11 et 17;
- on introduit séparément les deux éléments 23a et 23b de la poutre d'outillage 23 à travers l'espace laissé libre par l'élimination des bielles structurales 18, on introduit les vis d'extrémités 34 desdits éléments 23a et 23b dans les trous correspondant des ferrures 15 et on assemble les deux éléments 23a et 23b au moyen de la broche 33. Ensuite, on met en place les vis de solidarisation 32 des deux éléments 23a et 23b; on visse les écrous 35 sur les vis 34, sans les bloquer;
- on dépose les bielles structurales 19 et on monte les goussets 28 sur leurs ferrures 46. On monte les bielles 25 entre les pattes 37 et les goussets 28 et les bielles 26 entre les goussets 43 et les goussets 28;
- on dépose les bielles structurales 20;
- on met en place le tendeur 27 entre les pattes 16 de la membrure 10 du cadre 11, on desserre les moyens de fixation 22 de ladite membrure sur le profilé 12 et on met ledit tendeur en tension jusqu'à ce que les moyens de fixation 12 soient libres;
- on élimine les moyens de fixation 21 du treillis 14 sur le profilé 12;
- on élimine les moyens de fixation 22;
- on dépose la poutre 13 et on bloque les écrous 35.

La poutre d'outillage 23 et les bielles d'outillage 25, 26 remplacent alors mécaniquement la poutre structurale 13 et les bielles structurales 18, 19 et 20, mais délimitent un gabarit plus grand en hauteur au droit du cadre 11.

Pour remettre en place la structure d'origine de l'avion cargo 1:
- on présente la poutre 13 équipée de son tendeur 27 et on engage les moyens de fixation 22 de ladite partie sur le profilé 12;
- on refixe les moyens de fixation 21 entre la poutre 13 et le profilé;
- on dépose les bielles d'outillage 25 et 26 et les goussets 28;
- on remonte les bielles structurales 19 et 20;
- on désassemble les deux éléments de la poutre d'outillage 23;
- on dépose les tirants 24;
- on dépose les écrous 35 et on élimine les éléments 23a et 23b de la poutre 23;
- on remonte les bielles 18; et
- on serre les moyens de fixation 22 de la poutre structurale 13 sur le profilé 12.

L'avion cargo 1 retrouve alors sa structure initiale.

**Revendications**

1. Procédé pour augmenter provisoirement l'ouverture d'un cadre structural (11) d'un aéronef (1), notamment aux moments du chargement et du déchargement d'une charge, ledit cadre structural (11) étant constitué d'un châssis annulaire (12) renforcé par au moins une poutre structurale (13) sous-tendant une partie dudit châssis (12),
caractérisé en ce que:
- dans le cas où ladite poutre structurale (13) serait fixée au châssis (12), en totalité ou en partie, par des moyens de fixation non démontables, on commence par effectuer une modification durable consistant à remplacer lesdits moyens de fixation non-démontables par des moyens de fixation amovibles;
- on prévoit un outillage (23, 24) susceptible, d'une part, de remplacer mécaniquement la poutre structurale (13) ou la partie de poutre structurale fixée au châssis (12) par des moyens amovibles et, d'autre part, d'assurer l'augmentation d'ouverture désirée pour ledit cadre (11);
- pendant les périodes auxquelles on désire une augmentation de l'ouverture du cadre (11), on remplace ladite poutre structurale (13) ou partie de poutre structurale par ledit outillage (23, 24); et
- à la fin de ces périodes, on remplace ledit outillage (23, 24) par ladite poutre structurale (13) ou partie de poutre structurale.

2. Procédé selon la revendication 1, mis en oeuvre dans le cas où il existe des éléments de liaison mécaniques (18, 19, 20) entre ladite poutre structurale (13) ou partie de poutre amovible ou rendue amovible et un cadre structural (17) voisin dudit cadre structural (11),
caractérisé en ce que l'on rend amovibles ces éléments de liaison (18, 19, 20), s'ils ne l'étaient pas d'origine, pour pouvoir les monter et les démonter à volonté et en ce que l'on prévoit dans l'outillage des moyens (25, 26) pour la substitution provisoire de ces éléments de liaison (18, 19, 20).

3. Dispositif permettant d'augmenter provisoirement l'ouverture d'un cadre structural (11) d'aéronef (1), notamment aux moments du chargement et du déchargement d'une charge, ledit cadre structural (11) étant constitué d'un châssis annulaire (12) renforcé par au moins une poutre (13) sous-tendant une partie dudit châssis (12),
caractérisé en ce qu'il comporte un outillage (23, 24) pouvant être fixé provisoirement audit châssis (12) pour, d'une part remplacer mécaniquement ladite poutre structurale (13) ou une partie de celle-ci, et, d'autre part, assurer l'augmentation d'ouverture désirée pour ledit cadre (11), lorsque ledit outillage (23, 24) est rendu solidaire dudit châssis (12) à la place de ladite poutre structurale (13) ou partie de partie structurale.

4. Dispositif selon la revendication 3,
caractérisé en ce que ledit outillage comporte une poutre (23) en forme d'arc ou analogue et au moins un tirant (24), ledit tirant étant destiné à relier la partie médiane de la poutre d'outillage (23) au châssis (12) du cadre (11), tandis que des moyens (15) sont prévus pour solidariser audit châssis (12) les extrémités de ladite poutre d'ouillage (23) en des points proches de ceux de la membrure (10) de la poutre structurale (13) provisoirement remplacée.

5. Dispositif selon la revendication 4,
caractérisé en ce que la poutre d'outillage (23) est constituée de deux parties solidarisables.

6. Dispositif selon l'une des revendications 4 ou 5, pour un aéronef (1) dans lequel des bielles structurales (18, 19, 20) existent entre le cadre structural (11) dont on veut agrandir provisoirement l'ouverture et un cadre structural voisin (17),
caractérisé en ce que l'outillage (23, 24) comporte de plus des bielles d'outillage (26) de substitution, reliées de façon amovible, d'une part, auxdits tirants (24) et, d'autre part, audit cadre structural voisin (17).

7. Dispositif selon la revendication 6,
caractérisé en ce que ledit outillage comporte de plus des bielles (25) de substitution, reliées de façon amovible, d'une part, à la poutre d'outillage (23) et, d'autre part, audit cadre structural voisin (17).

8. Dispositif selon l'une quelconque des revendications 4 à 7,
caractérisé en ce que, dans la mesure du possible, ledit outillage est adapté à utiliser des moyens d'ancrage (15) préexistants d'origine sur le ou les cadres structuraux (11, 17). 9. Dispositif selon l'une quelconque des revendications 4 â 7,
caractérisé en ce que ledit outillage comporte des moyens de serrage pour sa fixation sur le ou lesdits cadres structuraux (11, 17).

10. Dispositif selon l'une quelconque des revendications 4 à 9,
caractérisé en ce que ledit outillage comporte de plus un tendeur (27) susceptible d'être monté en parallèle sur ladite poutre structurale (13).

**Patentansprüche**

1. Verfahren zum behelfsmäßigen Vergrössern der Öffnung eines Gefügerahmens (11) eines Luftfahrzeuges (1), insbesondere beim Beladen oder Entladen einer Fracht, der aus einem ringförmigen Gestell (12) besteht; das zumindest von einem einen Teil des Gesiells (12) umspannenden Gefügeträger (13) verstärkt wird, dadurch gekennzeichnet, daß
- für den Fall, daß der Träger (13) als Ganzes oder zum Teil durch nicht abnehmbare Befestigungsmittel am Gestell (12) befestigt ist, damit begonnen wird, eine dauerhafte Veränderung vorzunehmen, indem die nicht abnehmbaren Befestigungsmittel durch abnehmbare Befestigungsmittel ersetzt werden;
- eine Ausrüstung (23, 24) vorgesehen ist, durch die einerseits der Träger (13) oder der am Gesiell (12) befestigte Teil des Trägers durch abnehmbare Mittel mechanisch ersetzt wird und durch die andererseits die gewünschte Öffnungsvergrößerung für den Rahmen (11) gesichert wird;
- während der Zeiten, in denen eine Vergrößerung der Öffnung des Rahmens (11) gewünscht wird, der Träger (13) oder ein Teil des Trägers durch die Ausrüstung (23, 24) ersetzt wird, und daß
- am Ende dieser Zeilen die Ausrüstung (23, 24) wieder durch den Träger (13) oder einem Teil des Trägers ersetzt wird.

2. Verfahren nach Anspruch 1, das für den Fall zum Einsatz kommt, daß mechanische Verbindungsglieder (18, 19, 20) zwischen dem abnehmbaren oder abnehmbar gemachten Träger (13) oder Trägerteil und einem am Gefügerahmen (11) angrenzenden Rahmen (17) vorhanden sind, dadurch gekennzeichnet, daß die Verbindungsglieder (18, 19, 20) abnehmbar gemacht werden, falls sie dies nicht bereits von Anfang an waren, so daß sie nach Bedart eingesetzt oder entfernt werden können, und daß bei der Ausrüstung (23, 24) Miitel (25, 26) zum behelfsmäßigen Ersetzen der Verbindungsglieder (18, 19, 20) vorgesehen sind.

3. Vorrichtung, durch die die Öffnung eines Gefügerahmens (11) eines Luftfahrzeuges (1) insbesondere zu den Zeiten der Be- und Entladung einer Fracht vergrößert werden kann, wobei der Rahmen (11) aus einem ringförmigen Gestell (12) besteht, das zumindest von einem einen Teil des Gestells (12) umspannenden Gefügeträger (13) verstärkt wird,
gekennzeichnet durch eine Ausrüstung (23, 24), die einerseits zum mechanischen Ersatz des Trägers (13) oder Trägerteils und andererseits zur Sicherung der gewünschten Öffnungsvergrößerung für den Rahmen (11) behelfsmäßig am Gestell (12) befestigt werden kann, wenn die Ausrüstung (23, 24) mit dem Gestell (12) anstatt mit dem Träger (13) oder Trägerteil fest verbunden ist.

4. Vorrichtung nach Anspruch 3, dadurch gekennzeichnet, daß die Ausrüstung einen bogenförmig oder analog ausgebildeten Träger (23) und zumindest eine Spannstange oder Strebe (24) umfaßt, die den mittleren Teil des Trägers (23) mit dem Gestell (12) des Rahmens (11) verbinden soll, wobei Mittel (15) vorgesehen, durch die die Enden des Trägers am Gestell (12) an den Stellen befestigt werden, die in der Nähe von denen der Gurtung (10) des behelfsmäßig ersetzten Trägers (13) liegen.

5. Vorrichtung nach Anspruch 4, dadurch gekennzeichnet, daß der Träger (23) aus zwei befestigungsfähigen Teilen gebildet ist.

6. Vorrichtung nach einem der vorhergehenden Ansprüche 4 oder 5 für ein Luftfahrzeug (1), bei dem Zwischenglieder (18, 19, 20) zwischen dem Rahmen (11), deren Öffnung man behelfshalber vergrößern möchte, und einem angrenzenden Rahmen (17) bestehen, dadurch gekennzeichnet, daß die Ausrüstung (23, 24) darüber hinaus Ersatz-Zwischenglieder (26) aufweist, die einerseits mit den Spannstangen oder Streben (24) und andererseits mit dem angrenzenden Rahmen (17) abnehmbar verbunden sind.

7. Vorrichtung nach Anspruch 6, dadurch gekennzeichnet, daß die Ausrüstung darüber hinaus Ersatz-Zwischenglieder (25) aufweist, die einerseits mit dem Träger (23) und andererseits mit dem angrenzenden Rahmen (17) abnehmbar verbunden sind.

8. Vorrichtung nach einem der vorhergehenden Ansprüche 4 bis 7, dadurch gekennzeichnet, daß im Rahmen des Möglichen die Ausrüstung zur Verwendung der von Anfang an vorher bestehenden Verankerungsmitteln (15) an dem oder den Rahmen (11, 17) geeignet ist.

9. Vorrichtung nach einem der vorhergehenden Ansprüche 4 bis 7, dadurch gekennzeichnet, daß die Ausrüstung zu deren Befestigung an dem oder den Rahmen (11, 17) Festspannmittel aufweist.

10. Vorrichtung nach einem der vorhergehenden Ansprüche 4 bis 9, dadurch gekennzeichnet, daß die Ausrüstung darüber hinaus ein Spannglied (27) aufweist, das parallel am Träger (13) eingesetzt werden kann.

## Claims

1. Method for temporarily increasing the opening or hatch area of a structural frame (11) of an aircraft (1), particularly when loading and unloading cargo, said structural frame (11) being constituted of an annular underframe (12) reinforced by at least one structural girder (13) sub-tending part of said underframe (12), characterized in that:

- in the case where said structural girder (13) is fully or partly secured to the underframe (12) by way of nondismountable securing means, a permanent modification is carried out which modification consists in replacing the nondismountable securing means by removable securing means;

- a fixture (23, 24) is provided which is adapted, on the one hand, to mechanically replace the structural girder (13) or part thereof secured to the underframe (12) by removable means, and on the other hand, to obtain the required hatch enlargement for the frame (11);

- during those periods where a larger opening or hatch area of the frame (11) is required, said structural girder (13) or part thereof is replaced by said fixture (23, 24); and

- at the end of these periods, said fixture (23, 24) is replaced by said structural girder (13) or part thereof.

2. Method as claimed in claim 7, used in the case where mechanical connection elements (18,19,20) exist between said structural girder (13) or part thereof, removable or caused to be removable, and a structural frame (17) adjacent to said structural frame (11), characterized in that said connecting elements (18, 19, 20) are made to be removable, if they were not already, in order that they can be mounted or dismounted at will, and in that means (25, 26) are provided in said fixture to temporarily replace said connecting elements (18, 19, 20).

3. Device permitting to temporarily enlarge the opening or hatch area of a structural frame (11) of an aircraft (1), particularly when loading or unloading cargo, said structural frame (11) being of the type constituted of an annular underframe (12) reinforced by at least one girder (13) sub-tending part of said underframe (12), characterized in that a fixture (23, 24) is provided which fixture can be temporarily fixed to the underframe (12), on the one hand, to replace mechanically said structural girder (13) or part thereof, and on the other hand, to give the required enlargement of the hatch area of said frame (11), when said fixture (23, 24) is fitted to the underframe (12) in replacement of said structural girder (13) or part thereof.

4. Device as claimed in claim 3, characterized in that said fixture comprises a girder (23) which is arc-shaped or similar, and at least a tie-brace (24), which tie-brace is designed to connect the middle part of the fixture girder (23) to the underframe (12) of the frame (11), whereas means (15) are provided to secure to said underframe (12) the ends of said fixture girder (23) in points close to those of the chord (10) of the temporarily replaced structural girder (13).

5. Device as claimed in claim 4, characterized in that the fixture girder (23) is constituted of two joinable elements.

6. Device as claimed in claim 4 or in claim 5, characterized in that for an aircraft (1) in which structural connecting rods (18, 19, 20) are already provided between the structural frame (11) of which the opening or hatch area has to be enlarged, and a next structural frame (17), characterized in that the fixture (23, 24) further comprises replacement fixture rods (26) which are removably joined first to said tie-braces (24), and second, to the next structural frame (17).

7. Device as claimed in claim 6, wherein said fixture further comprises replacement rods (25), which are removably connected, on the one hand, to the fixture girder (23) and on the other hand, to the next structural frame (17).

8. Device as claimed in anyone of claims 4 to 7, characterized in that insofar as possible, said fixture is adapted for using the already existing anchoring means (15) on the structural frame or frames (11, 17).

9. Device as claimed in anyone of claims 4 to 7, characterized in that said fixture comprises means for clamping it in position on said structural frame or frames (11, 17).

10. Device as claimed in anyone of claims 4 to 9, characterized in that said fixture further comprises tension means (27) adapted to be mounted in parallel on said structural girder (13).

*Fig:1*

II

5  6

1  4  11  2

2''

2'

9  3  17  7

II

1  8  10

4

10  10

9

*Fig:2*

0 151 542

*Fig. 3*

*Fig. 4*

*Fig. 7*

3

Fig.5

Fig.6

0 151 542

Fig.8

**Fig.9**

30a

23

34

**Fig.10**

29b

32

23

29a

23b

**Fig.14**

26

17

10

25

28

46

**Fig.13**

26

46

17

10

28

25

Fig:11

Fig:12